# NEUE EUROPÄISCHE PATENTSCHRIFT

(11) **EP 1 167 317 B2**
(45) Veröffentlichungstag und Bekanntmachung des Hinweises auf die Entscheidung über den Einspruch: **22.02.2012**
(45) Hinweis auf die Patenterteilung: 26.11.2003
(21) Anmeldenummer: 00113018.6
(22) Anmeldetag: 21.06.2000
(51) Int. Cl.: C04B 28/02, C04B 22/12, C04B 22/14, C04B 103/10, C04B 111/10

(54) **Alkalifreier Abbinde- und Erhärtungsbeschleuniger**
Alkali-free set and hardening accelerator
Accelerateur de prise et de durcissement exempt de métaux alcalins

(43) Veröffentlichungstag der Anmeldung: 02.01.2002
(73) Patentinhaber: Sika Technology AG, 6340 Baar (CH)
(72) Erfinder: Sommer, Marcel, 8408 Winterthur (CH); Wombacher, Franz, 8917 Oberlunkhofen (CH); Bürge, Theodor A., 8954 Geroldswil (CH)
(74) Vertreter: Sika Patent Attorneys

(56) Entgegenhaltungen:
- EP-A- 0 742 179
- WO-A-98/18740
- CHEMICAL ABSTRACTS, vol. 92, no. 4, 28. Januar 1980 (1980-01-28) Columbus, Ohio, US; abstract no. 27520f, H.NAKAMURA: "Cement-rapid-hardening agent" XP000060027 & JP 54 101831 A (H.NAKAMURA) 10. August 1979 (1979-08-10)
- DATABASE WPI Section Ch, Week 198020 Derwent Publications Ltd., London, GB; Class L02, AN 1980-36151C XP002154250 & SU 687 019 A (LENGD RAIL TRANSPOR), 25. September 1979 (1979-09-25)

## Beschreibung

Die vorliegende Erfindung betrifft einen alkali- resp. alkalimetall- und chloridfreien Beschleuniger sowie ein Verfahren für das Abbinden und Erhärten eines hydraulischen Bindemittels.

Beispiele für Bindemittel, deren Abbinden und Erhärten durch Zugabe der erfindungsgemässen Beschleuniger rascher erfolgt, sind beispielsweise Zement oder hydraulischer Kalk, und Beispiele für Mischungen die derartige Bindemittel enthalten, sind Mörtel und Beton.

Anwendungsmöglichkeiten für den erfindungsgemässen Beschleuniger und das erfindungsgemässe Verfahren liegen in der Herstellung vorfabrizierter Elemente und dem Beschleunigen von auf der Baustelle hergestelltem Beton. Im ersten Falle kann die übliche Erhärtungsbeschleunigung durch Wärmen (Elektro- oder Ölheizung oder Dampf) verkürzt oder gar eliminiert werden. Im zweiten Falle können die Ausschalfristen für den Beton verkürzt werden oder es kann auch bei tiefer Temperatur weiter betoniert werden. Anwendungen ergeben sich auch bei der Herstellung rasch abbindener Zement- und Mörtelmischungen, speziell zum Fixieren von Fertigteilen, Gussstücken etc.

Ein besonderes Einsatzgebiet ist der Spritzmörtel und Spritzbeton. Solche Mörtel und Betone dienen zur Herstellung von Bauwerken des Hoch- und Tiefbaues sowie für den Ausbau und die Auskleidung von unterirdischen, natürlich oder künstlich geschaffenen Hohlräumen, wie Stollen-, Tunnel- oder Bergbauten, bei welchen der Beton den statischen Erfordernissen entsprechen, sowie wasserdicht sein muss. Sie dienen ebenfalls zur Konsolidierung von Baugruben, Böschungen, lockeren Felswänden etc.

Es sind bereits viele Substanzen bekannt, welche das Abbinden und Erhärten von Beton beschleunigen. Die gebräuchlichsten sind u.a. stark alkalisch reagierende Stoffe wie Alkalihydroxide, Alkalikarbonate, Alkalisilikate, Alkalialumiunate und Erdalkalichloride.

Bei den stark alkalisch reagierenden Stoffen treten unerwünschte Belästigungen.des Verarbeiters auf. So können solche Produkte die Haut sehr stark verätzen und Augenentzündungen oder Hornhautverätzungen verursachen, welche die Sehfähigkeit beeinträchtigen können. Durch Einatmen des beim Verarbeiten entstehenden Staubes können auch schädliche Auswirkungen auf die Atemwege entstehen.

Betontechnologisch gesehen reduzieren stark alkalische Abbindebeschleuniger die Endfestigkeit, vergrössern das Schwinden, was zu Rissbildung führen kann und deshalb die Dauerhaftigkeit, vor allem die Sulfatbeständigkeit des Zementes, stark reduziert.

Beschleuniger für das Abbinden hydraulischer Bindemittel auf Basis von amorphem Aluminiumhydroxid sind bereits bekannt aus EP-A 0 026 262, insbesondere Ansprüche 1 und 11 bis 13, sowie aus Chemical Abstracts Band 86, Nummer 18, Mai 1977, Seite 300, 126087c.

Gemäss EP-A 0 026 262, Seite 2, letzter Absatz liegt die Teilchengrösse des amorphen Aluminiumhydroxids insbesondere im Bereich zwischen 4,8 und 5,4 µm.

Auch ein quellfähiges Celluloseprodukt und weitere Zusatzstoffe können in einem derartigen Erhärtungsbeschleuniger enthalten sein, vgl. EP-A 0 026 262, insbesondere Ansprüche 8 bis 10 und die Beispiele.

Aus DE-A 2 548 687, insbesondere Patentanspruch und Seite 15, ist der Zusatz von Aluminiumsulfat oder Nitraten zu Abbindebeschleunigern auf Basis von Aluminat und Aluminiumoxid bekannt.

Aus der FR-A 2 471 955, insbesondere Ansprüche 1 bis 6, sind die Verwendung von Formiaten und Nitraten in Beschleunigern bekannt.

EP 0 076 927 beschreibt ein Verfahren zur Abbindebeschleunigung durch Zusatz von amorphem Aluminiumhydroxid und wenigstens einem wasserlöslichen Sulfat und/oder Nitrat und/oder Formiat.

EP 181 739 A1 beschreibt die Verwendung von Calciumsulfoaluminat und einer Mischung von Calciumaluminaten, welche zusammen mit Alkalien oder Erdalkalien bei einem Zusatz von 250% Wasser eine aushärtbare Aufschlämmung ergeben.

JP 63 206 341 A2 schützt einen Beschleuniger aus kalziniertem Alunit, Calcium- sulfoaluminat, Natriumaluminat, Natriumcarbonat.

JP 58 190 849 A2 beschreibt eine Mischung aus Calciumsulfoaluminat, Calciumsulfat-Hemihydrat und Calciumhydroxid zur Herstellung rasch abbindender, spritzbarer Beschichtungen.

SU 697 427 erwähnt einen rasch abbinden Zement durch Zusatz von Calciumaluminat, Calciumsulfoaluminat, Calciumoxid, Ferrit, Silikat und Gips.

JP 54 026 817 erwähnt die beschleunigte Aushärtung von Gips durch Zusatz von Calciumsulfoaluminat.

JP 53 099 228 beschreibt einen Beschleuniger für Vergussmörtel basierend auf Calciumsulfoaluminat und Calciumfluoroaluminat und wasserreduzierenden Mitteln.

In DE-OS 2 163 604 sind Beschleuniger auf Basis Calciumfluoraluminat erwähnt.

Aus der JP 01 290 543 A2 sind Mischungen von Calciumsulfoaluminat mit Calciumsulfat und Lithiumcarbonat als Beschleuniger bei tiefen Temperaturen bekannt.

SU 1 350 136 A1 wiederum beschreibt Klinker mit raschem Abbinden durch Zugabe von Bariumsulfat, Calciumaluminat und Calciumsulfoaluminat.

WO 9736839 beschreibt die Verwendung von Lithiumsilikat und/oder Lithiumaluminat und/oder Aluminiumsalzen.

WO 98/18740 beinhaltet ein Verfahren zur Herstellung eines Erstarrungs- und Erhärtungsbeschleunigers für hydraulische Bindemittel. Das gemäss Anspruch 1 zwingend aus 5 Komponenten bestehende Produkt weist eine starke Trübung, eine hohe Viskosität und eine geringe Lagerstabilität auf. Dies kann zu Verstopfungen der Spritzdüsen führen. Die hohe Viskosität führt auf der Baustelle beim Dosieren des Produktes, vor allem bei tiefen Temperaturen, zu Problemen. Ein Verdünnen des Produktes ist nicht möglich, da dadurch ein Teil der basischen Salze ausgefällt wird. Der tiefe pH-Wert führt zu Korrosion an den Dosier- und Spritzeinrichtungen.

US 5,772,753 beschreibt einen Beschleuniger auf der Basis Aluminiumhydroxid mit einem organischen Anion. Die Herstellung aus der Alkalialuminat-Lösung beinhaltet einen sehr aufwändigen Waschprozess und führt zu meist unlöslichen Aluminiumverbindungen.

Ziel der vorliegenden Erfindung war es, einen alkali- resp. alkalimetall- und chloridfreien Abbindeund Erhärtungsbeschleuniger zu entwickeln, durch welchen ein äusserst rasches Abbinden erreicht werden kann.

Ein Gegenstand der vorliegenden Erfindung ist daher ein Beschleuniger für das Abbinden und Erhärten eines Bindemittels oder einer Mischung, die ein Bindemittel enthält, durch einen Beschleuniger, welcher mindestens ein wasserlösliches fluoridhaltiges Aluminiumsalz und mindestens ein wasserlösliches sulfathaltiges Aluminiumsalz, sowie als Komplexbildner Ethylendiamintetraessigsäure (unter Komplexbildner werden im Rahmen der vorliegenden Erfindung Substanzen verstanden, die das Abbindeverfahren und die Stabilisierung verbessern) und/gegebenenfalls Amine, welche als Stabilisator wirken um eine Ausfällung von Aluminiumhydroxid zu verhindern, enthält oder daraus besteht. Vorzugsweise liegt der pH-Wert eines erfindungsgemässen Beschleunigers im Bereich von ca. pH 2-8.

Weitere Gegenstände der vorliegenden Erfindung sind die Verwendung eines erfindungsgemässen Beschleunigers zur Beschleunigung des Abbindes und Erhärtens von hydraulischen Bindemitteln, hydraulischen Bindemitteln in Abmischung mit latent hydraulischen oder inerten Füllstoffen, Mörtel oder Beton; ein Verfahren zum beschleunigten Abbinden und Erhärten eines Gemisches, welches Bindemittel enthält, das dadurch gekennzeichnet ist, dass dem Gemisch üblicherweise 0.1 bis 10 Gew.-% (bezogen auf einen Beschleuniger mit 20-80 Gew.-% Wassergehalt), bezogen auf das Gewicht dieses Bindemittels, eines erfindungsgemässen alkali- resp. alkalimetall- und chloridfreien Abbinde- und Erhärtungsbeschleunigers zugegeben werden; sowie ein den erfindungsgemässen Beschleuniger enthaltendes härtbares resp. gehärtetes Bindemittel resp. bindemittelhaltiges Gemisch.

Ein weiterer Gegenstand der vorliegenden Erfindung ist die Herstellung eines erfindungsgemässen Bindemittels unter Erzeugung der wasserlöslichen fluoridhaltigen Aluminiumsalze aus Aluminiumhydroxid und/oder Aluminiumoxid und Fluorwasserstoffsäure, gegebenenfalls bei erhöhter Temperatur, vorzugsweise vor der Zumischung der wasserlöslichen sulfathaltigen Salze und gegebenenfalls weiterer Zusätze.

Ferner ist Erfindungsgegenstand ein gehärtetes oder ungehärtetes, Bindemittel enthaltendes Gemisch, das dadurch gekennzeichnet ist, dass es einen erfindungsgemässen Beschleuniger enthält.

Der Begriff alkalifrei resp. alkalimetallfrei, wie er im Rahmen der vorliegenden Erfindung gebraucht wird, entspricht gängigen Normen und bedeutet ≤ 1% Na₂O-Äquivalenz.

Bevorzugte Ausführungsformen des erfindungsgemässen Abbinde- und Erhärtungsbeschleunigers, des erfindungsgemässen Herstellungs- und Anwendungsverfahrens sowie der erfindungsgemässen Verwendung sind in den entsprechenden abhängigen Ansprüchen definiert.

Beispiele für Bindemittel, deren Erhärten und Abbinden durch das erfindungsgemässe Verfahren beschleunigt werden kann, sind Zement, hydraulischer Kalk alleine oder in Abmischung mit latent hydraulischen Bindemitteln oder inerten Füllstoffen, und Beispiele für Mischungen, welche diese Bindemittel enthalten, sind Mörtel und Beton.

Bevorzugte wasserlösliche, fluoridhaltige Aluminiumsalzen sind insbesondere solche, die aus Aluminiumhydroxid und/oder Aluminiumoxid und Fluorwasserstoffsäure herstellbar sind. Überraschenderweise hat sich gezeigt, dass jedes Aluminiumhydroxid zur Erzeugung geeigneter Fluoride einsetzbar ist, d.h. nicht nur amorphes sondern auch kristallines Aluminiumhydroxid. Je nach Konzentration und Menge der Fluorwasserstoffsäure kann die genaue Zusammensetzung der fluoridhaltigen Aluminiumsalze etwas schwanken. Die aus z.B. Aluminiumhydroxid und/oder Aluminiumoxid und Fluorwasserstoffsäure hergestellten Aluminiumsalze können direkt im erfindungsgemässen Beschleuniger verwendet werden oder nach Trocknung, beispielsweise Sprühtrocknung, falls ein Beschleuniger in Pulverform angestrebt wird.

Bevorzugte wasserlösliche sulfathaltige Aluminiumsalze sind insbesondere Aluminiumsulfat sowie basische Aluminiumsulfate.

Die erfindungsgemässen Beschleuniger können als Lösung, Dispersion oder pulverförmig vorliegt. Neben Wasser können sie Zusatzstoffe enthalten, wie mindestens ein Aluminiumsalz ausgewählt aus der Gruppe umfassend Oxalat, Nitrat, Glykolat, Lactat, Azetat, Formiat oder den entsprechenden basischen Salzen oder Mischungen der genannten Salze. Das Komplexbildner Ethylendiamintetraessigsäure ist enthalten, in einer Menge von 0.01-5 Gew.-%, bezogen auf das Gewicht eine flüssigen Beschleunigers mit Wassergehalt von 20-80 Gew.-% gegebenenfalls kann weiter mindestens ein Amin aus der Gruppe Alkan- und/oder Alkanolamin in einer Menge von 0.1-20 Gew.-%, bezogen auf das Gewicht eines flüssigen Beschleunigers mit Wassergehalt von 20-80 Gew.-%, enthalten sein.

Weitere Zusätze, die im erfindungsgemässen Beschleuniger entweder alleine oder zusammen mit einem oder mehreren weiteren Zusätzen enthalten sein können, umfassen mindestens ein Verdickungsmittel ausgewählt aus der Gruppe umfassend Bentonit, Bentone, fermentierte organische Biopolymere, Alginate, Polyglykolether, Acrylatoder Urethanverdicker oder Mischungen derselben.

Für die Verwendung wird der erfindungsgemässe Beschleuniger - falls er in Pulverform vorliegt - vorzugsweise vor seiner Anwendung in Wasser gelöst oder dispergiert.

Ein erfindungsgemässer Beschleuniger, vorzugsweise ein Beschleuniger in gelöster oder dispergierter Form, ist speziell geeignet für ein ebenfalls Gegenstand der Erfindung bildendes Verfahren. Dieses Verfahren zur Beschleunigung des Abbindens und Erhärtens von hydraulischen Bindemitteln sowie daraus hergestelltem Mörtel und Beton, ist dadurch gekennzeichnet, dass man den erfindungsgemässen Beschleuniger in einer Menge von vorzugsweise 0,1 bis 10 Gew.-% (bezogen auf einen flüssigen Beschleuniger mit 0-80 Gew.-% Wasser), bezogen auf das Gewicht des hydraulischen Bindemittels, dem hydraulischen Bindemittel zugibt.

Eine bevorzugte Verwendung des erfindungsgemässen Abbinde- und Erhärtungsbeschleunigers erfolgt im Spritzmörtel oder Spritzbeton nach dem Trocken- oder Nass-spritzverfahren und ist dadurch gekennzeichnet, dass der Beschleuniger dem trockenen oder mit Wasser angemachten Bindemittel, Mörtel oder Beton in der Förderleitung, der Vorbenetzungsdüse oder der Spritzdüse, in flüssiger oder diespergierter Form mit einem Flüssigdosiergerät, direkt in die Mischung oder ins Anmachwasser zugegeben resp. zudosiert wird. Ein Beschleuniger in Pulverform wird an den obengenannten Orten vorzugsweise mittels Pulverdosiergerät zudosiert.

Durch die Verwendung der erfindungsgemässen Abbinde- und Erhärtungsbeschleuniger wird ein äusserst rasches Abbinden der entsprechenden Bindemittel oder der Mischungen, die derartige Bindemittel enthalten, bewirkt, und es werden hohe Anfangs- und Endfestigkeiten erreicht. Die Abbinde- und Erhärtungsbeschleuniger wirken weder auf den Verarbeiter noch auf die Umwelt ätzend oder toxisch.

Gleichzeitig können die Kosten auf der Baustelle durch eine deutlich erhöhte Wirksamkeit und geringeren Unterhalt der Geräte sowie weniger Ausfallzeit im Vergleich zu den heutigen alkalifreien Beschleunigern gesenkt werden. Neben den technischen resultieren also auch enorme wirtschaftliche Vorteile.

Da die erfindungsgemässen Abbindebeschleuniger keine Alkalien enthalten, werden weder die Festigkeitsentwicklung noch das Schwinden negativ beeinflusst.

Die folgenden Beispiele erläutern die Erfindung. Sie sollen diese aber in keiner Art und Weise einschränken.

### Beispiele

### Beschleuniger bestehend aus:

| **Nr**. | **Komponente** | **Massen %** |
|---|---|---|
| **1** | Wasser | 30 |
| | Aluminiumhydroxid | 10 |
| | Fluorwasserstoffsäure 40% | 20 |
| | Aluminiumsulfat | 32 |
| | Komplexbildner* | 0.5 |
| | Amin ** | 7.5 |
| | | |

| **Nr.** | **Komponente** | **Massen %** |
|---|---|---|
| **2** | Wasser | 45 |
| | Aluminiumhydroxid | 10 |
| | Aluminiumsulfat | 20 |
| | Fluorwasserstoffsäure 40% | 20 |
| | Komplexbildner * | 0.5 |
| | Amin *** | 4.5 |
| **3** | Wasser | 34.5 |
| | Aluminiumhydroxid | 10 |
| | Fluorwasserstoffsäure 40% | 15 |
| | Aluminiumsulfat | 40 |
| | Komplexbildner * | 0.5 |

| | | |
|---|---|---|
| * = Ethylendiamin-tetraessigsäure ** = Diethanolamin *** = Methyldiethanolamin | | |

wurden in den folgenden Beispielen mit einem herkömmlichen, käuflichen Beschleuniger verglichen.

In den folgenden Beispielen wird der Einfluss der erfindungsgemässen Abbindebeschleuniger auf zementöse Systeme dargestellt. Als Prüfmischungen wurden Mörtel gewählt, die den Beton simulieren sollen. Die Mischungen setzten sich wie folgt zusammen:

| | |
|---|---|
| Portlandzement Typ CEM I 42.5 | 250.00 g |
| Sand 0- 2.2 mm | 750.00 g |
| Wasser | 122.50 g |
| Superverflüssiger auf Melaminbasis | 2.50 g |

Die Abbindeproben wurden mit einem Penetrometer der Firma RMU (Italien) bestimmt. Abbindebeginn und - ende wurden bei einem Eindringwiderstand der 2 mm Nadel von 600 g bzw. 2200 g abgelesen.

Effekt eines erfindungsgemässen Abbindebeschleunigers im Vergleich zu einem herkömmlichen alkaliund chloridfreien Beschleuniger auf die Abbindezeit.

| **Beschleuniger** | **Eindringwiderstand** | |
|---|---|---|
| | **Abbindebeginn** | **Abbindeende** |
| Erfindungsgemässer Beschleuniger Nr. 1 | 23 min. | 40 min. |
| Erfindungsgemässer Beschleuniger Nr. 2 | 18 min. | 37 min. |
| Erfindungsgemässer Beschleuniger Nr. 3 | 15 min. | 40 min. |
| Herkömmlicher käuflicher Beschleuniger | 30 min. | 65 min. |

Beschleuniger = 6% auf die Zementmasse bezogen
Herkömmlicher käuflicher Beschleuniger = wässrige Lösung auf Basis Aluminiumsulfatformiat

Die deutlich verbesserte resp. tiefere Viskosität des erfindungsgemässen Beschleunigers wird gegenüber dem herkömmlichen Abbindebeschleuniger deutlich gemacht. Die Viskosität wurde mittels der Auslaufzeit aus einem DIN Fordbecher ⌀ 4 mm gemessen.

| **Beschleuniger** | **Auslaufzeit (20°C)** |
|---|---|
| Erfindungsgemässer Beschleuniger Nr. 1 | 21 sec. |
| Erfindungsgemässer Beschleuniger Nr. 2 | 19 sec. |
| Erfindungsgemässer Beschleuniger Nr. 3 | 17 sec. |
| Herkömmlicher käuflicher Beschleuniger | 29 sec. |

Im Vergleich zum herkömmlichen Beschleuniger liegen die Werte der Auslaufzeit des erfindungsgemässen Beschleunigers deutlich tiefer.

## Patentansprüche

1. Alkali- und chloridfreier Abbinde- und Erhärtungsbeschleuniger für hydraulische Bindemittel, enthaltend oder bestehend aus mindestens einem wasserlöslichen fluoridhaltigen und mindestens einem wasserlöslichen sulfathaltigen Aluminiumsalz, **dadurch gekennzeichnet, dass** der Beschleuniger Ethylendiamintetraessigsäure in einer Menge von 0.01-5 Gew.-%, bezogen auf das Gewicht eines flüssigen Beschleunigers mit Wassergehalt von 20-80 Gew.-%, enthält.

2. Beschleuniger gemäss Anspruch 1, **dadurch gekennzeichnet, dass** das wasserlösliche fluoridhaltige Aluminiumsalz erhältlich ist durch Reaktion von amorphem oder kristallinem Aluminiumhydroxid und/oder Aluminiumoxid und Fluorwasserstoffsäure.

3. Beschleuniger nach Anspruch 1 oder 2, **dadurch gekennzeichnet, dass** er zusätzlich mindestens ein Aluminiumsalz, ausgewählt aus der Gruppe umfassend Oxalat, Nitrat, Glykolat, Lactat, Azetat, Formiat, deren entsprechenden basischen Salze und Mischungen der genannten Salze, enthält.

4. Beschleuniger nach einem der Ansprüche 1 bis 3, **dadurch gekennzeichnet, dass** er mindestens ein Amin, ausgewählt aus der Gruppe umfassend Alkylamin, Alkanolamin und Mischungen derselben, in einer Menge von 0.1-20 Gew.-%, bezogen auf das Gewicht eines flüssigen Beschleunigers mit Wassergehalt von 20-80 Gew.-%, enthält.

5. Beschleuniger nach einem der Ansprüche 1 bis 4, **dadurch gekennzeichnet, dass** er mindestens ein Verdickungsmittel, ausgewählt aus der Gruppe umfassend Bentonit, Bentone, fermentierte organische Biopolymere, Alginate, Polyglykolether, Acrylat-, Urethanverdicker und Mischungen derselben, enthält.

6. Beschleuniger nach einem der Ansprüche 1 bis 5, **dadurch gekennzeichnet, dass** er als Lösung, Dispersion oder pulverförmig vorliegt.

7. Verwendung des Beschleunigers nach einem der Ansprüche 1 bis 6, **dadurch gekennzeichnet, dass** ein als Pulver vorliegender Beschleuniger vor der Anwendung in Wasser gelöst oder dispergiert wird.

8. Verfahren zur Beschleunigung des Abbindens und Erhärtens von hydraulischen Bindemitteln sowie daraus hergestelltem Mörtel und Beton, **dadurch gekennzeichnet, dass** man den Beschleuniger nach einem der Ansprüche 1 bis 5, in einer Menge von 0,1 bis 10 Gew.-%), bezogen auf das Gewicht des hydraulischen Bindemittels, zugibt.

9. Verwendung des Beschleunigers nach einem der Ansprüche 1 bis 6 zur Beschleunigung des Abbindens und Erhärtens von hydraulischen Bindemitteln, hydraulischen Bindemitteln in Abmischung mit latent hydraulischen Bindemitteln oder inerten Füllstoffen, Mörtel oder Beton.

10. Verwendung des Abbinde- und Erhärtungsbeschleunigers nach einem der Ansprüche 1 bis 6 im Spritzmörtel oder Spritzbeton nach dem Trocken- oder Nass-spritzverfahren, wobei der Beschleuniger dem trockenen oder mit Wasser angemachten Bindemittel, Mörtel oder Beton in der Förderleitung, der Vorbenetzungsdüse oder der Spritzdüse, in flüssiger oder dispergierter Form mit einem Flüssigdosiergerät, in Pulverform mit einem Pulverdosiergerät, direkt in die Mischung oder ins Anmachwasser zugegeben wird.

11. Verfahren zur Herstellung eines Beschleunigers nach einem der Ansprüche 1 bis 6, **dadurch gekennzeichnet, dass** das wasserlösliche, fluoridhaltige Aluminiumsalz aus amorphem oder kristallinem Aluminiumhydroxid und/oder Aluminiumoxid und Fluorwasserstoffsäure, gegebenenfalls bei erhöhter Temperatur, vor dem Zumischen anderer Komponenten hergestellt wird.

12. Bindemittel enthaltendes Gemisch, **dadurch gekennzeichnet, dass** es den Beschleuniger nach einem der Ansprüche 1 bis 6 enthält.

## Claims

1. Alkali- and chloride-free setting and curing accelerator for hydraulic binders, containing or consisting of at least one water-soluble fluoride-containing aluminium salt and at least one water-soluble sulfate-containing aluminium salt, **characterized in that** the accelerator contains ethylenediaminetetraacetic acid in an amount of 0.01-5% by weight, based on the weight of a liquid accelerator having a water content of 20-80% by weight.

2. Accelerator according to Claim 1, **characterized in that** the water-soluble fluoride-containing aluminium salt is obtained by reaction of amorphous or crystalline aluminium hydroxide and/or aluminium oxide and hydrofluoric acid.

3. Accelerator according to Claim 1 or 2, **characterized in that** it additionally contains at least one aluminium salt selected from the group consisting of oxalate, nitrate, glycolate, lactate, acetate, formate, their corresponding basic salts and mixtures of the salts mentioned.

4. Accelerator according to any of claims 1 to 3, **characterized in that** it contains at least one amine selected from the group consisting of alkylamine, alkanolamine and mixtures thereof in an amount of 0.1 - 20% by weight, based on the weight of a liquid accelerator having a water content of 20-80% by weight.

5. Accelerator according to any of Claims 1 to 4, **characterized in that** it contains at least one thickener selected from the group consisting of bentonite, bentone, fermented organic biopolymers, alginates, polyglycol ethers, acrylate thickeners, urethane thickeners and mixtures thereof.

6. Accelerator according to any of Claims 1 to 5, **characterized in that** it is in the form of a solution, dispersion or powder.

7. Use of the accelerator according to any of Claims 1 to 6, **characterized in that** a pulverulent accelerator is dissolved or dispersed in water before use.

8. Method of accelerating the setting and curing of hydraulic binders and a mortar and concrete produced therefrom, **characterized in that** the accelerator according to any of Claims 1 to 5 is added in an amount of from 0.1 to 10% by weight, based on the weight of the hydraulic binder.

9. Use of the accelerator according to any of Claims 1 to 6 for accelerating the setting and curing of hydraulic binders, hydraulic binders in admixture with latently hydraulic binders or inert fillers, mortar or concrete.

10. Use of the setting and curing accelerator according to any of Claims 1 to 6 in spray mortar or spray concrete according to the dry- or wet-spraying process, wherein the accelerator is added to the dry or water-mixed binder, mortar or concrete in the transport line, the prewetting nozzle or the spray nozzle, in liquid or dispersed form by means of a liquid metering apparatus, in powder form by means of a powder metering apparatus, directly into the mixture or into the make-up water.

11. Process for preparing an accelerator according to any of Claims 1 to 6, **characterized in that** the water-soluble, fluoride-containing aluminium salt is prepared from amorphous or crystalline aluminium hydroxide and/or aluminium oxide and hydrofluoric acid, if appropriate at elevated temperature, prior to mixing with other components.

12. A binder-containing mixture **characterized in that** it contains the accelerator according to any of Claims 1 to 6.

## Revendications

1. Accélérateur de prise et de durcissement exempt d'alcalis et de chlorures pour liants hydrauliques, contenant ou composé d'au moins un sel d'aluminium qui contient du fluor, soluble dans l'eau, et au moins un sel d'aluminium qui contient du sulfate, soluble dans l'eau, **caractérisé par le fait que** l'accélérateur contient de l'acide éthylènediaminetétraacétique en quantité de 0,01 à 5% en poids par rapport au poids d'un accélérateur liquide dont la teneur en eau est de 20 à 80% en poids.

2. Accélérateur selon la revendication 1, **caractérisé en ce que** le sel d'aluminium qui contient du fluor, soluble dans l'eau, est obtenu par réaction entre de l'hydroxyde d'aluminium amorphe ou cristallin et/ou de l'oxyde d'aluminium avec de l'acide fluorhydrique.

3. Accélérateur selon la revendication 1 ou 2, **caractérisé en ce qu'**il contient en outre au moins un sel d'aluminium sélectionné dans le groupe qui comprend l'oxalate, le nitrate, le glycolate, le lactate, l'acétate, le formiate, leurs sels basiques correspondants et les mélanges desdits sels.

4. Accélérateur selon l'une des revendications 1 à 3, **caractérisé en ce qu'**il contient au moins une amine sélectionnée dans le groupe qui comprend les alkylamines, les alcanolamines et les mélanges de celles-ci, en quantité de 0,1 à 20% en poids par rapport au poids d'un accélérateur liquide dont la teneur en eau est de 20 à 80% en poids.

5. Accélérateur selon l'une des revendications 1 à 4, **caractérisé en ce qu'**il contient au moins un agent épaississant sélectionné dans le groupe qui comprend la bentonite, Bentone, des biopolymères organiques fermentés, des alginates, des polyglycoléthers, des épaississants à base d'acrylates ou d'uréthane et des mélanges de ceux-ci.

6. Accélérateur selon l'une des revendications 1 à 5, **caractérisé en ce qu'**il se présente sous la forme de solution, de dispersion ou de poudre.

7. Utilisation de l'accélérateur selon l'une des revendications 1 à 6, **caractérisée en ce qu'**un accélérateur qui se présente sous la forme de poudre est dissous ou dispersé dans l'eau avant son utilisation.

8. Procédé d'accélération de la prise et du durcissement de liants hydrauliques ainsi que des mortiers et bétons préparés à partir d'eux, **caractérisé en ce que** l'on ajoute l'accélérateur selon l'une des revendications 1 à 5 en quantité de 0,1 à 10 % en poids par rapport au poids du liant hydraulique.

9. Utilisation de l'accélérateur selon l'une des revendications 1 à 6 pour l'accélération de la prise et du durcissement de liants hydrauliques, de liants hydrauliques mélangés avec des liants hydrauliques latents ou des charges inertes du mortier ou du béton.

10. Utilisation de l'accélérateur de prise et de durcissement selon l'une des revendications 1 à 6 dans le mortier projeté ou le béton projeté selon le procédé de projection humide ou à sec, l'accélérateur étant ajouté au liant, au mortier ou au béton secs ou mélangés à de l'eau, dans le conduit de transport, l'ajutage de prémouillage ou l'ajutage de projection, sous forme liquide ou dispersée, à l'aide d'un appareil de dosage de liquides, sous forme de poudre, avec un appareil de dosage de poudre, directement dans le mélange ou dans l'eau de mélange.

11. Procédé de préparation d'un accélérateur selon l'une des revendications 1 à 6, **caractérisé en ce que** le sel d'aluminium soluble dans l'eau et contenant du fluor, constitué d'hydroxyde d'aluminium amorphe ou cristallin et/ou d'oxyde d'aluminium et d'acide fluorhydrique est préparé, éventuellement à température accrue, avant l'addition des autres composants.

12. Mélange contenant un liant, **caractérisé en ce qu'**il contient l'accélérateur selon l'une des revendications 1 à 6.
